(19) **Europäisches Patentamt / European Patent Office / Office européen des brevets**

(11) **EP 2 108 265 B1**

(12) **EUROPEAN PATENT SPECIFICATION**

(45) Date of publication and mention
of the grant of the patent:
**04.07.2012 Bulletin 2012/27**

(51) Int Cl.:
*A23G 9/44* (2006.01)          *A23G 9/14* (2006.01)
*A23G 9/32* (2006.01)

(21) Application number: **09154480.9**

(22) Date of filing: **06.03.2009**

(54) **Ice confection**

Eiskonfekt

Confection glacée

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **11.04.2008 EP 08154432**

(43) Date of publication of application:
**14.10.2009 Bulletin 2009/42**

(73) Proprietors:
• **Unilever PLC**
  **London**
  **EC4Y 0DY (GB)**
  Designated Contracting States:
  **CY GB IE MT**
• **Unilever N.V.**
  **3013 AL Rotterdam (NL)**
  Designated Contracting States:
  **AT BE BG CH CZ DE DK EE ES FI FR GR HR HU IS IT LI LT LU LV MC MK NL NO PL PT RO SE SI SK TR**

(72) Inventors:
• **Aldred, Alexander**
  **Bedford, Bedfordshire MK44 1LQ (GB)**
• **Binley, Gary, Norman**
  **200051, Shanghai (CN)**
• **Chamberlain, Dorothy**
  **Bedford, Bedfordshire MK44 1LQ (GB)**

(74) Representative: **Clarke, Christopher John**
  **Unilever Patent Group**
  **Colworth House**
  **Sharnbrook**
  **Bedford MK44 1LQ (GB)**

(56) References cited:
EP-A- 1 051 913          EP-A- 1 212 948
EP-A- 1 709 875          EP-A- 1 716 762
EP-A- 1 929 879          WO-A-97/16980
WO-A-2006/007923      US-A- 4 737 372

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the invention

The present invention relates to ice confections, in particular ice confections that have a dry, soft and crumbly texture.

### Background to the invention

Water ices, fruit ices, milk ices and similar ice confections are popular products. They are essentially made from water and sugar, together with other ingredients such as fruit, milk solids, colours, flavours, stabilizers and acidifying agents. The solids (i.e. all the ingredients other than water), the most part of which is sugars, typically constitute 15 to 25% of the ice confection. Ice confections are normally quite hard and cold-eating. In order to provide consumer appeal, there is a continual need for ice confections which have new and / or unusual texture or appearance.

WO06/007923, US 4 737 372, EP 1 929879 (not pre-published), EP 1 051 913 and WO 97/16980 disclose frozen confections containing particles of ice.

EP 1 716 762, EP 1 212 948 and EP 1 709 875 disclose processes for producing frozen confections using low temperature extrusion.

EP 1158862 discloses ice confections that have a brittle, crunchy texture. The confections contain an antifreeze protein and are produced by aerating with a water-soluble gas. However, it would be advantageous to produce ice confections having an unusual of texture without requiring specialised ingredients.

### Summary of the invention

We have now found that by adding frozen particles of a certain size into a partially frozen and aerated mix, and then further freezing in a low temperature screw extruder, low solids ice confections can be produced which have an unusual texture. Accordingly, the present invention provides a process for preparing an ice confection having a total solids content of from 8 to 25 wt% and an overrun of from 10 to 100%, the process comprising the steps of:

a) aerating and partially freezing a mix of ingredients;
b) producing a slurry comprising the aerated, partially frozen mix and frozen particles which have a size of from 0.1 to 1 mm, wherein the amount of frozen particles is from 10 to 70% by weight of the slurry;
c) further freezing the slurry in a low temperature extruder.

The resulting ice confections have an unusual dry, soft, crumbly and frangible texture. The ice confections have the further advantage that they have low total solids contents, and hence low sugar contents, which appeals to health-conscious consumers. They contain a high amount of ice so provide refreshment, but unlike conventional low solids ice confections, they are not hard or cold-eating. They can also be shaped on extrusion.

Preferably the ice confection has a total solids content of from 10 to 20%.

Preferably the ice confection has an overrun of from 20 to 80%.

Preferably the frozen particles have a size of less than 0.5mm.

Preferably the amount of frozen particles is from 20 to 60% by weight of the slurry.

Preferably the solids content of the frozen particles is less than 0.5 wt%, more preferably the frozen particles are ice.

Preferably in step b), frozen particles having a size of greater than 1 mm are added into the aerated partially frozen mix and then the size of the particles is reduced to less than 1 mm.

In a second aspect the present invention provides an ice confection having a total solids content of from 8 to 25wt%, an overrun of from 10 to 100%, a mean gas bubble size of less than 35$\mu$m, and comprising 10 to 70% by weight frozen particles which have a size of from 0.1 to 1 mm.

Preferably the mean gas bubble size is less than 30$\mu$m.

### Detailed description of the invention

Unless defined otherwise, all technical and scientific terms used herein have the same meaning as commonly understood by one of ordinary skill in the art (e.g. in frozen confectionery manufacture). Definitions and descriptions of various terms and techniques used in frozen confectionery manufacture are found in "Ice Cream", 6th Edition, Marshall, Goff and Hartel (2003), Kluwer Academic/Plenum Publishers. All percentages, unless otherwise stated, refer to the percentage by weight, with the exception of percentages cited in relation to the overrun.

Ice confections are sweet-tasting fabricated foodstuffs intended for consumption in the frozen state. Ice confections of the present invention have total solids contents of from 8 to 25 wt%. Preferably the total solids content is at least 10%, more preferably at least 12%; and preferably at most 20%, more preferably at most 18%. The total solids content of an ice confection is the dry weight of the confection, i.e. the sum of the weights of all the ingredients other than water, expressed as a percentage of the total weight. It is measured as described in Ice Cream, 6th Edition, p 296.

Mixes can be prepared by conventional methods known in the art. Mixes typically contain, in addition to water, ingredients conventionally found in water ices, fruit ices and milk ices, such as sugars (e.g. dextrose, fructose, sucrose, lactose, corn syrups and sugar alcohols such as sorbitol, or glycerol); fruit (e.g. in the form of juice or puree); proteins (e.g. milk protein or soy protein, typically in an amount of from 1 to 8 wt%); colours, flavours, acidifying agents and stabilizers (e.g. locust bean gum, guar gum agar, alginate, carrageenan, pectin, carboxymethyl cellulose or xanthan). The amount of stabilizer is typically from 0 to 0.3 wt%. In water ice formulations the solids content is essentially made up of the sugars, with only small amounts of other ingredients. In milk ices and fruit ices, non-sugar ingredients make up a larger proportion of the total solids. The sugars provide most of the freezing point depression, and hence principally determine the ice content of the confection. Since the total solids content is from 8 to 25 wt%, the water content is correspondingly from 92 to 75 wt%. At a temperature of -18°C most, but not all, of the water is frozen.

The mix is partially frozen, preferably in a dynamic freezer. By partial freezing, it is meant that part, but not all, of the water in the mix is frozen into ice crystals. The term "dynamic freezer" means a freezer in which the mix is frozen under shear, (e.g. with agitation or mixing). Thus dynamic freezers include conventional ice cream freezers (scraped-surface heat exchangers). The dynamic freezing process produces small ice crystals, typically 50$\mu$m in size.

The mix is also aerated with air or another food grade gas, such as carbon dioxide, so that the final ice confection has an overrun of at least 10%, more preferably at least 20%, most preferably at least 30%. Preferably the overrun is at most 100%, more preferably at most 80%, most preferably at most 60%. Overrun is measured at atmospheric pressure and is defined by the following equation:

$$\text{overrun (\%)} = \frac{\text{density of mix - density of ice confection}}{\text{density of ice confection}} \times 100 \ .$$

"Mix" refers to the unaerated mix prior to aeration or following de-aeration of a melted ice confection.

Preferably after step a), the aerated, partially frozen ice confection is at a temperature of from about -3 to -12°C, more preferably from -4 to -8°C, depending on the formulation, in particular the sugar content.

The aerated, partially frozen mix is next combined with frozen particles to form a slurry. The frozen particles in the ice confection have a size (maximum diameter) of from 0.1 to 1 mm, preferably less than 0.5 mm. We have found that frozen particles of this size result in ice confections having the desired frangible texture, whereas particles larger than this do not. The term "frozen particles" does not refer to the ice crystals that are generated during the dynamic freezing step which are much smaller, typically 0.05mm in size.

The slurry can be produced by adding frozen particles of the required size which can be produced in any suitable manner, for example by milling a large block of ice or frozen solution. Alternatively larger particles can be initially added to the partially frozen mix and subsequently reduced to the required size, typically by mechanical means. Such a subsequent size reduction step provides a convenient and continuous method for producing frozen particles having the required size. The size reduction step can be performed e.g. by passing the slurry through a constriction of a set size: for example, by passing the slurry through a pump comprising an outlet of the set size, and/or passing the slurry between parallel plates separated by the set size and wherein one of the plates rotates relative to the other. A suitable size-reduction device (a crushing pump) which allows for in-line reduction of particle size is described in WO 2006 / 007922.

The frozen particles are added in an amount such that they constitute from 10 to 70%, preferably at least 20%, more preferably at least 30% by weight of the ice confection, for example about 40 to 50%. We have found that these amounts of frozen particles provide the desired frangible texture. Preferably the frozen particles are added in an amount of at most 60%, more preferably at most 55%. We have found that it is difficult to obtain a product in which the frozen particles are evenly distributed in the slurry when the frozen particles are added in amounts above this level.

The frozen particles are not necessarily ice, but typically have a low total solids content, for example less than 1%. In a preferred embodiment, the frozen particles are ice. In another embodiment a small amount of solids is present, such as less than 0.5 wt%, preferably less than 0.1 wt%, so that, for example, the frozen particles are flavoured or coloured. The lower the solids content of the frozen particles, the lower the solids content of the final product.

"Low temperature extrusion" or "cold extrusion" is a technique that has been used in the production of frozen confections. It is described in "Ice Cream", 6th Edition page 190 and "The Science of Ice Cream", C. Clarke, pages 81-82. In low temperature extrusion, a partially frozen confection is produced, e.g. in a conventional ice cream freezer (a scraped surface heat exchanger). On leaving the freezer, typically at about -5°C, the ice confection is passed through a screw extruder with a refrigerated barrel under pressure (typically 4 to 10 bar), thus further cooling it to typically below -10°C. The extruder applies a high shear stress which allows it to pump the ice confection at these low temperatures when it has very high viscosity. This results in a fine distribution of ice crystal and gas bubbles. However, it has hitherto been difficult to process low solids frozen confections in low temperature extruders due to the high amount of ice that it present at extruder temperatures. We have found that slurries containing frozen particles according to the invention can be processed in low temperature extruders because the ice is added as relatively large particles instead of being in the form of small ice crystals. Moreover, we have observed that the resulting gas bubbles are small (less than about 35μm, preferably less than 30μm) and are located interstitially between the frozen particles. Without wishing to be limited by theory, it is believed that this microstructure results in the unusual frangible texture. Gas bubble size is determined by the method described in example 1.

The ice confection of the invention may constitute an entire product or may be a component of a composite product. In a composite product the ice confection provides contrast in texture and appearance to the other component (s) of the product. Preferably such composite products contain the ice confection as a discrete element in their structure. For example, an ice cream core can be coated with a layer of the ice confection. Another example is the incorporation of the ice confection as inclusions. Alternatively the ice confection may be provided with a continuous or partial coating of, for example, a water glaze, a non-aerated water ice or chocolate on at least one surface. In a composite product the determination of the total solids content and amount of frozen particles takes into account only the ice confection, and not other components of the composite product.

The present invention will now be further described with reference to the following examples, which are illustrative only and non-limiting:

## EXAMPLES

Example 1: Ice confections

A water ice mix was prepared according to the formulation shown in Table 1.

Table 1

| Ingredient (wt%) | Water ice |
|---|---|
| Apple / grape / lemon puree (65 Brix) | 7.27 |
| Sucrose | 12.0 |
| Dextrose | 6.0 |
| Glucose / fructose syrup (63DE) | 8.0 |
| Hygel | 0.36 |
| Locust bean gum | 0.36 |
| Flavour | 0.6 |
| Citric acid | 0.73 |
| Beta carotene | 0.05 |
| Total solids (mix) | 30.8 |
| Water | To 100 |

Hygel is a milk protein-based aerating agent, obtained from Kerry Biosciences.

All ingredients except for the flavour and acids were combined in an agitated heated mix tank and subjected to high shear mixing at a temperature of above 65°C for 2 minutes. The resulting mix was then passed through an homogeniser at 150 bar and 70°C, pasteurised at 83°C for 20 s and then rapidly cooled to 4°C using a plate heat exchanger. The flavour and acids were then added to the mix which was then held at 4°C in a stirred tank for around 4 hours prior to freezing.

The mix was partially frozen and aerated using a Crepaco W04 ice cream freezer (a scraped surface heat exchanger) at a mix flow rate of about 100 litres / hour, an extrusion temperature of -7.4°C and an overrun at the freezer outlet of 50%. A closed dasher (series 15) was used.

A Ziegra Ice machine UBE 2000 (ZIEGRA-Eismaschinen GmbH, Isernhagen, Germany) was used to produce ice particles measuring approximately 5 x 5 x 5-7 mm. The ice particles were fed into the stream of partially frozen mix as it left the freezer, using a fruit feeder (vane type). The flow rate of the partially frozen mix from the freezer and the rate of ice addition were controlled to give the desired amount of large ice particles. Two parts of ice particles were added to 3 parts of mix, so that the added ice constituted 40 wt% of the total product. Thus the product had a total solids content of 30.8 x 0.6 = 18.5 wt%.

The resulting slurry was passed through a size-reduction device (a crushing pump as described in WO 2006 / 007922). This ensures that the ice particles have a maximum length of less than a certain size (the gap size) in at least one dimension. The particles may be larger than the gap size in another dimension, and typically have an aspect ratio of up to 2. Thus, in order to obtain particles of less than 1mm, a gap size of 0.5mm was used; similarly to obtain particles of less than 0.5mm, the gap size was at 0.25mm. Ice confections were produced using gap sizes of 0.15, 0.25, 0.5 and 1.0 mm.

The slurry at a temperature of about -4.5 to -5°C was then passed through an ammonia-cooled low temperature single screw extruder. It was extruded at a temperature of about -12°C through a shaped nozzle and cut into pieces. Sticks were inserted, the products were blast frozen at -35°C for 3 hours and then stored at -25°C in a cold store until required for testing. A comparative example was also produced in which the slurry was not passed through the extruder, and placed directly in the blast freezer after the crushing pump.

The microstructures of the ice confections were visualised using Low Temperature Scanning Electron Microscopy. Each sample was cooled to -80°C on dry ice, and a section, approximately 5mm x 5mm x 10mm in size, was cut out and mounted on a sample holder using a Tissue Tek: OCT™ compound (PVA 11%, Carbowax 5% and 85% non-reactive components). The sample including the holder was plunged into liquid nitrogen slush and transferred to a low temperature preparation chamber (Oxford Instruments CT1500HF). The chamber was held under vacuum, approximately $10^{-4}$ bar. The sample was warmed up to -90°C for 60 to 90 seconds, thereby slowly etching the ice in order to reveal surface detail not caused by the ice itself. The sample was then cooled to -110°C and coated with gold using argon plasma with an applied pressure of $10^{-1}$ millibars and current of 6 milliamps for 45 seconds. The sample was finally transferred to a conventional scanning electron microscope (JSM 5600), fitted with an Oxford Instruments cold stage held at a temperature of -160°C. The sample was examined and representative areas were captured via digital image acquisition software at magnifications of x 100.

The gas bubble size (diameter) and frozen particle size distributions were obtained from the two dimensional representation of the three dimensional microstructure, as visualized in the SEM micrographs. A trained operator (i.e. one familiar with the microstructures of frozen aerated systems) traced the outlines of the gas bubbles and frozen particles in the digital SEM images using a graphical user interface. The operator was able to distinguish gas bubbles from ice crystals and frozen particles because the gas bubbles are approximately spherical objects of varying brightness / darkness whereas ice crystals and frozen particles are irregularly shaped objects of a uniform grey appearance. The ice crystals (typically 50μm) are distinguished from the frozen particles (e.g. 0.5 mm) by their size. The particle size was calculated from the outline defined by the operator in the cross-sectional view of the micrograph by measuring the maximum area (A) as and multiplying this by a scaling factor defined by the microscope magnification (different magnifications are used for the gas bubbles and frozen particles). The bubble / particle diameter is defined as the equivalent circular diameter d:

$$d = 2\sqrt{A/\pi}$$

The size distributions were obtained by constructing histograms consisting of bins of width $W$ μm. B(j) is the number of bubbles per unit area in the $j^{th}$ bin (i.e. in the diameter range j x W to (j+1) x W). B(j) is obtained by adding up all the individual contributions of the gas bubbles or frozen particles with a diameter in the range j x W to (j+1) x W. The size distributions are conveniently described in terms of the normalised cumulative frequency, i.e. the total number of bubbles / particles with diameter up to a given size, expressed as a fraction of the total number of bubbles / particles measured. The determination of the size and construction of the distribution was performed automatically on a computer, MATLAB R2006a software (MathWorks, Inc). At least 500, typically several thousand, bubbles / particles were sized for each sample in order to ensure that the measurement was robust. The mean gas bubble size was obtained from the distributions for the samples listed in table 2.

Table 2

| Gap size (mm) | Low temperature extruder | Mean gas bubble size (μm) |
|---|---|---|
| 0.25 | No | 42 |
| 1.0 | Yes | 39 |
| 0.25 | Yes | 27 |

The SEM microstructures of the samples according to the invention showed small gas bubbles located interstitially between the frozen particles. However, in the 1mm gap size sample, no small interstitial air was observed and in the sample which was not passed through the low temperature extruder, the gas bubbles were noticeably larger.

The sensory properties of the samples were evaluated by an informal panel of tasters. The samples produced with the 0.15, 0.25 and 0.5 mm gap sizes were dry in appearance and were dry to touch. When cut with a knife, the samples were crumbly. On eating, the samples were soft and had a dry, crumbly texture. They were described as frangible, i.e. when bitten the samples broke up into fragments. The texture was reminiscent of fresh snow.

The sample produced with the 1mm gap size (which contains frozen particles which are larger than 1 mm in one dimension and hence have an equivalent circular diameter size of greater than 1 mm) had noticeable ice pieces on eating. When bitten, the sample did not crumble, but deformed more plastically and retained some cohesion. It was described as crunchy rather than crumbly. The sample produced with the 0.25 mm gap size but without low temperature extrusion was less dry in appearance. When bitten, the sample was not dry and frangible, but was perceived to break down by melting / dissolving in the mouth rather than crumbling.

Example 2: Ice confections

Water ice, fruit ice and milk ice mixes were prepared and frozen as described in example 1. The formulations and processing conditions are shown in Table 2.

Table 2

| Ingredient (wt%) | Water ice | Fruit ice | Fruit ice | Milk ice |
|---|---|---|---|---|
| Peach puree (31 Brix) | | 30.0 | | |
| Mango puree (31 Brix) | | | 40 | |
| Sucrose | 16.67 | 10.0 | | 8.0 |
| Dextrose | 3.33 | 6.0 | 25.0 | |
| Fructose | | | 5.0 | 4.0 |
| 63DE Glucose / fructose syrup | | 8.0 | | |
| Coconut oil | | | | 4.5 |
| Whey | | | | 1.5 |
| Skimmed milk powder | | | | 4.0 |
| Hygel | 0.333 | 0.13 | 0.13 | 0.15 |
| Locust bean gum | 0.417 | 0.17 | 0.17 | 0.2 |
| Flavour | 0.17 | 0.1 | 0.32 | 0.1 |
| Citric acid | 0.667 | 0.73 | 0.73 | |
| Beta carotene | 0.083 | | | |
| Total solids (mix) | 21.1 | 32.1 | 35.4 | 22.5 |
| Water | To 100 | To 100 | To 100 | To 100 |
| | | | | |
| Overrun % | 40 | 25 | 50 | 40 |
| Freezer exit temperature (°C) | -4.2 | -5.5 | -12.0 | -6.0 |

(continued)

| Ingredient (wt%) | Water ice | Fruit ice | Fruit ice | Milk ice |
|---|---|---|---|---|
| Ice Inclusion Level (%) | 40 | 45 | 45 | 40 |
| Total solids (product) (wt %) | 12.7 | 17.7 | 19.5 | 13.5 |
| Gap Size (mm) | 0.25 | 0.25 | 0.25 | 0.25 |
| Extruder exit temperature (°C) | -3.3 | -8.0 | -12.0 | -10.0 |

The samples were dry in appearance and to touch. On eating, the samples were soft and had a dry, crumbly texture. They were described as frangible, i.e. when bitten the samples broke up into fragments.

Examples 1 and 2 demonstrate that ice confections having a dry, crumbly and frangible texture can be produced by the process of the invention. The ice confections have the further advantage that they have low solids contents, and hence high ice contents, but are nonetheless soft when eaten. By adding a substantial amount of ice in the form of frozen particles, the ice confections can be processed in a low temperature extruder, whereas ice confections having the same overall formulation but without frozen particles generally cannot. The products can also be shaped on extrusion from the low temperature extruder.

Comparative Examples

WO 06 / 007923 discloses ice-containing products which comprise frozen particles having a size of greater than 0.5mm and less than 5mm. Example 4 of this document discloses a fruit ice having a total solids content of 20.4 wt%, an overrun of 60% which contains 40 wt% of ice particles produced using a crushing pump with a gap size of 1 mm. This example was reproduced according to the specified process and formulation, i.e. without a low-temperature extrusion step. The gas bubble size was measured as described in example 1 above and found to be 45μm.

EP 1 929 879 (not pre-published) discloses frozen confections having a total solids content of less than 10% and comprising frozen particles which have a mean size of from 0.5mm to 20mm. Example 2B of this document discloses a water ice having a total solids content of 7.6%, an overrun of 30% which contains 35 wt% of ice particles produced using a crushing pump with a gap size of 1 mm. This example was reproduced according to the specified process and formulation, i.e. without a low-temperature extrusion step. The gas bubble size was measured as described in example 1 above and found to be 120μm.

The various features and embodiments of the present invention, referred to in individual sections above apply, as appropriate, to other sections, *mutatis mutandis*. Consequently features specified in one section may be combined with features specified in other sections, as appropriate.

All publications mentioned in the above specification are herein incorporated by reference. Various modifications and variations of the described methods and products of the invention will be apparent to those skilled in the art without departing from the scope of the invention. Although the invention has been described in connection with specific preferred embodiments, it should be understood that the invention as claimed should not be unduly limited to such specific embodiments. Indeed, various modifications of the described modes for carrying out the invention which are apparent to those skilled in the relevant fields are intended to be within the scope of the following claims.

**Claims**

1. A process for preparing an ice confection having a total solids content of from 8 to 25 wt% and an overrun of from 10 to 100%, the process comprising the steps of:

    a) aerating and partially freezing a mix of ingredients;
    b) producing a slurry comprising the aerated, partially frozen mix and frozen particles which have a size of from 0.1 to 1 mm; wherein the amount of frozen particles is from 10 to 70% by weight of the slurry; and
    c) further freezing the slurry in a low temperature extruder.

2. A process according to claim 1 wherein the solids content is from 10 to 20%.

3. A process according to claim 1 or 2 wherein the overrun is from 20 to 80%.

4. A process according to any of claims 1 to 3 wherein the frozen particles have a size of less than 0.5mm.

5. A process according to any of claims 1 to 4 wherein the amount of frozen particles is from 20 to 60% by weight of the slurry.

6. A process according to any of claims 1 to 5 wherein the solids content of the frozen particles is less than 0.5 wt%.

7. A process according to claim 6 wherein the frozen particles are ice.

8. A process according to any of claims 1 to 7 wherein in step b), frozen particles having a size of greater than 1mm are added into the partially frozen mix and then the size of the particles is reduced to less than 1 mm.

9. An ice confection having a total solids content of 8 to 25 wt%, an overrun of 10 to 100%, a mean gas bubble size of less than $35\mu m$, and comprising 10 to 70% by weight frozen particles which have a size of from 0.1 to 1 mm.

10. An ice confection according to claim 9 wherein the solids content is from 10 to 20%.

11. An ice confection according to claim 9 or 10 wherein the overrun is from 20 to 80%.

12. An ice confection according to any of claims 9 to 11 wherein the frozen particles have a size of less than 0.5mm.

13. An ice confection according to any of claims 9 to 12 wherein the amount of frozen particles is from 20 to 60% by weight of the ice confection.

14. An ice confection according to any of claims 9 to 13 wherein the frozen particles are ice.

15. An ice confection according to any of claims 9 to 14 wherein the mean gas bubble size is less than $30\mu m$.


**Patentansprüche**

1. Verfahren zur Herstellung eines Eiskonfektes, das einen gesamten Feststoffgehalt von 8 bis 25 Gew.-% und einen Aufschlag von 10 bis 100 % hat, wobei das Verfahren die Schritte:

   a) Schäumen und partielles Gefrieren einer Mischung von Ingredienzien;
   b) Herstellen einer Aufschlämmung, die die geschäumte, partiell gefrorene Mischung und gefrorene Partikel, die eine Größe von 0,1 bis 1 mm haben, umfasst; wobei die Menge an gefrorenen Partikeln 10 bis 70 Gew.-% der Aufschlämmung ist, und
   c) weiteres Gefrieren der Aufschlämmung in einem Niedrigtemperaturextruder umfasst.

2. Verfahren gemäß Anspruch 1, wobei der Feststoffgehalt 10 bis 20 % ist.

3. Verfahren gemäß Anspruch 1 oder 2, wobei der Aufschlag 20 bis 80 % ist.

4. Verfahren gemäß einem der Ansprüche 1 bis 3, wobei die gefrorenen Partikel eine Größe von weniger als 0,5 mm haben.

5. Verfahren gemäß einem der Ansprüche 1 bis 4, wobei die Menge an gefrorenen Partikeln 20 bis 60 Gew.-% der Aufschlämmung ist.

6. Verfahren gemäß einem der Ansprüche 1 bis 5, wobei der Feststoffgehalt der gefrorenen Partikel weniger als 0,5 Gew.-% ist.

7. Verfahren gemäß Anspruch 6, wobei die gefrorenen Partikel Eis sind.

8. Verfahren gemäß einem der Ansprüche 1 bis 7, wobei in Schritt b) gefrorene Partikel mit einer Größe von größer als 1 mm in die teilweise gefrorene Mischung gegeben werden und dann die Größe der Partikel auf weniger als 1 mm verringert wird.

9. Eiskonfekt, das einen gesamten Feststoffgehalt von 8 bis 25 Gew.-%, einen Aufschlag von 10 bis 100 %, eine mittlere Gasblasengröße von weniger als 35 μm hat und das 10 bis 70 Gew.-% gefrorene Partikel, die eine Größe von 0,1 bis 1 mm haben, umfasst.

10. Eiskonfekt gemäß Anspruch 9, wobei der Feststoffgehalt 10 bis 20 % ist.

11. Eiskonfekt gemäß Anspruch 9 oder 10, wobei der Aufschlag 20 bis 80 % ist.

12. Eiskonfekt gemäß einem der Ansprüche 9 bis 11, wobei die gefrorenen Partikel eine Größe von weniger als 0,5 mm haben.

13. Eiskonfekt gemäß einem der Ansprüche 9 bis 12, wobei die Menge an gefrorenen Partikeln 20 bis 60 Gew.-% des Eiskonfekts ist.

14. Eiskonfekt gemäß einem der Ansprüche 9 bis 13, wobei die gefrorenen Partikel Eis sind.

15. Eiskonfekt gemäß einem der Ansprüche 9 bis 14, wobei die mittlere Gasblasengröße weniger als 30 μm ist.

## Revendications

1. Procédé de préparation d'un dessert glacé ayant une teneur en solides totale de 8 à 25 % en poids et un foisonnement de 10 à 100 %, le procédé comprenant les étapes consistant à :

   a) aérer et congeler partiellement un mélange d'ingrédients ;
   b) produire une suspension épaisse comprenant le mélange aéré, partiellement congelé et des particules congelées qui ont une taille de 0,1 à 1 mm ; dans lequel la quantité de particules congelées est de 10 à 70 % en poids de la suspension épaisse ; et
   c) poursuivre la congélation de la suspension épaisse dans une extrudeuse à basse température.

2. Procédé selon la revendication 1, dans lequel la teneur en solides est de 10 à 20 %.

3. Procédé selon les revendications 1 ou 2, dans lequel le foisonnement est de 20 à 80 %.

4. Procédé selon l'une quelconque des revendications 1 à 3, dans lequel les particules congelées ont une taille inférieure à 0,5 mm.

5. Procédé selon l'une quelconque des revendications 1 à 4, dans lequel la quantité de particules congelées est de 20 à 60 % en poids de la suspension épaisse.

6. Procédé selon l'une quelconque des revendications 1 à 5, dans lequel la teneur en solides des particules congelées est inférieure à 0,5 % en poids.

7. Procédé selon la revendication 6, dans lequel les particules congelées sont de la glace.

8. Procédé selon l'une quelconque des revendications 1 à 7 dans lequel, dans l'étape b), des particules congelées ayant une taille supérieure à 1 mm sont ajoutées au mélange partiellement congelé, puis la taille des particules est réduite à moins de 1 mm.

9. Dessert glacé ayant une teneur en solides totale de 8 à 25 %, un foisonnement de 10 à 100 %, une taille de bulles gazeuses moyenne inférieure à 35 μm, et comprenant 10 à 70 % en poids de particules congelées qui ont une taille de 01 à 1 mm.

10. Dessert glacé selon la revendication 9, dans lequel la teneur en solides est de 10 à 20 %.

11. Dessert glacé selon les revendications 9 ou 10, dans lequel le foisonnement est de 20 à 80 %.

12. Dessert glacé selon l'une quelconque des revendications 9 à 11, dans lequel les particules congelées ont une taille inférieure à 0,5 mm.

**13.** Dessert glacé selon l'une quelconque des revendications 9 à 12, dans lequel la quantité de particules congelées est de 20 à 60 % en poids du dessert glacé.

**14.** Dessert glacé selon l'une quelconque des revendications 9 à 13, dans lequel les particules congelées sont de la glace.

**15.** Dessert glacé selon l'une quelconque des revendications 9 à 14, dans lequel la taille moyenne des bulles gazeuses est inférieure à 30 $\mu$m.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 06007923 A
- US 4737372 A
- EP 1929879 A
- EP 1051913 A
- WO 9716980 A
- EP 1716762 A
- EP 1212948 A
- EP 1709875 A
- EP 1158862 A
- WO 2006007922 A

**Non-patent literature cited in the description**

- **Marshall ; Goff ; Hartel.** Ice Cream. Kluwer Academic/Plenum Publishers, 2003
- Ice Cream. 296
- Ice Cream. 190
- **C. Clarke.** *The Science of Ice Cream,* 81-82